Europäisches Patentamt

**European Patent Office**

**Office européen des brevets**

(11) Publication number: **0 039 404**
A1

# EUROPEAN PATENT APPLICATION

(21) Application number: 81102082.5

(22) Date of filing: 20.03.81

(51) Int. Cl.³: **B 62 D 1/10**

(30) Priority: **02.05.80 IT 2176080**

(43) Date of publication of application: 11.11.81
**Bulletin 81/45**

(84) Designated Contracting States: **DE FR GB SE**

(71) Applicant: **MOMO S.p.A., Via Ciro Menotti, 11, I-20129 Milan (IT)**

(72) Inventor: **Cattaneo, Marco, Dr., Via Frank, 32, I-27100 Pavia (IT)**

(74) Representative: **Borella, Ada, Ing. A. Racheli & C. Viale San Michele del Carso, 4, I-20144 Milan (IT)**

(54) **A collapsible connecting hub between a steering wheel and a steering column.**

(57) Connecting hub between steering wheel and steering column, comprising a collapsible portion and a rigid portion (12) for mounting on the steering column, according to which the collapsible portion comprises an integral sheet forming a central protruding portion (11) for the fastening of the steering wheel and a set of spokes (10) branching off from said protruding portion (12) and extending rearwardly, so that said spokes have one end thereof connected to said protruding portion, while the other end (10a) will be steadily connected to the rigid portion (12).

Applicant:

MOMO S.p.A.

I - 20129 MILAN

Via Ciro Menotti, 11

"A COLLAPSIBLE CONNECTING HUB BETWEEN A STEERING WHEEL AND A STEERING COLUMN".

This invention relates to a connecting hub between a steering wheel and a steering column, comprising a rigid metal portion and a collapsible portion for absorbing any possible collision energy.

According to the prior art, a hub currently used for adapting the steering wheel to the steering column is a rigid connecting element capable of transmitting the steering wheel movement to the steering column. At present, in almost all countries, a rule is in force requiring the collapsibility of the steering wheel members, so that in case of collision no damages would be caused to the driver at a speed of 15 miles/hour if the latter hits against the steering wheel. This problem is particularly significant whenever a different steering wheel is to be adapted to standard cars.

Attempts have already been made to provide a collapsible element formed of a tubular unit comprising slantwise arranged crossed metal strips, but these suffer from the dual disadvantage of scarcely absorbing the impacts and also sometimes of breaking under strain, leaving the strips free, which become dangerous cutting means in case of accident.

Therefore, it is the object of the present invention to carry out a hub capable of performing, in addition to its normal connecting function, also the function of efficiently and reliably absorbing the collision energy.

The foregoing object has been accomplished by providing a collapsible hub between the steering wheel and steering column, this hub comprising a collapsible portion and a rigid portion for mounting on the steering column, characterized in that said collapsible portion comprises an integral sheet forming a central protruding porjion for the fastening of the steering wheel and a set of spokes branching off from said central protruding portion and extending rearwardly, so that said spokes have one end thereof connected to said protruding portion and in one piece with it, while the other end thereof will be steadily connected

- 3 -

to said rigid portion, which will be mounted on the steering column.

Where the overall sizes have to be restricted due to limitation of the available space, it is provided that the spokes forming the connection between the rigid portion and the fastening plane for the steering wheel are C-shaped. Where the spokes are subjected to less limitations, the spokes may preferably have a S-shape.

A preferred solution of the invention further provides that the free ends of the spokes are imbedded within the casting of the rigid portion.

Another solution of the invention provides that apertures, for instance round or slotted holes can be drilled in the spokes, so as to vary the stiffness thereof and accordingly the collapsibility for any specific use.

In order that the characteristics of the invention be more clearly understood, by mere way of unrestrictive example, a series of drawings are here appended, to which reference will be made in the following description, and in which:

Fig. 1 is a side elevational view showing a hub according to the present invention;

Fig. 2 is a sectional view taken along line II-II of Fig. 1;

Fig. 3 is a top view of Fig. 1;

Fig. 4 is an elevational view showing a second embodiment of

0039404

- 4 -

the present invention;

Fig. 5 is a sectional view taken along line V-V of Fig. 4; and

Fig. 6 is a top plan view of the embodiment shown in Fig. 4 and 5.

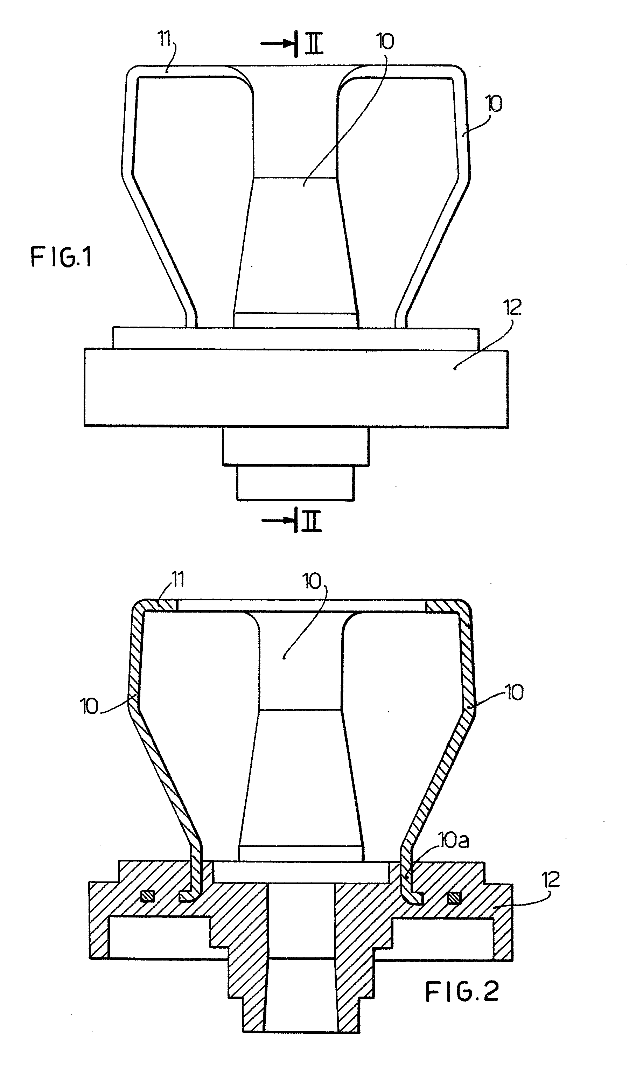

As seen from Figs. 1, 2 and 3, an embodiment of the present invention comprises a casting rigid portion 12, in which the ends 10a of four spokes 10 are imbedded. The spokes 10 join one another to form a central protruding portion 11, to which the steering wheel is secured by bolts. The central portion 11 and the spokes 10 are in one piece and made in iron sheet for performing good collapsability.

The rigid portion 12, (preferably a casting), will be secured to the steering column.

It clearly appears that in case of collision, by being integrally formed, the spokes 10 do not separate from one another and from the central protruding portion 11, but owing to the their shape and material, tend to bend and deform, so as to absorb a major portion of the energy being generated during collision. Finally, also the ends 10a thereof imbedded within the casting of the rigid portion 12 cannot disengage from said rigid portion and thus injure a driver.

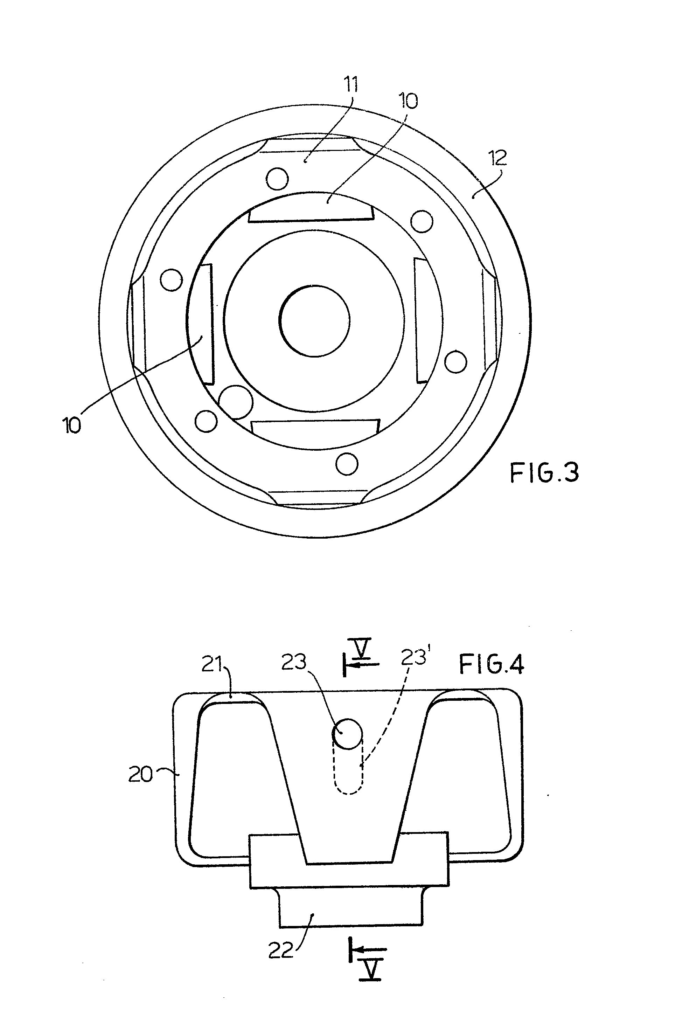

Fig. 4 is a side elevational view showing another possible embodiment according to the present invention. The spokes 20 are substantially C-shaped and in one piece with the central protruding portion 21. The hub of Fig. 4, of a lower height than that of Fig. 1, is particularly used where the distance between the steering column and steering wheel is reduced and, as a result, does not allow the use of the S-shaped spoke hub shown in the preceding figures. Also in this case the characteristics of collapsibility are remarkable, since the lower rigid portion 22 is capable in case of collision of re-entering the central hole between the spokes 20, taking advantage of the entire length of the hub.

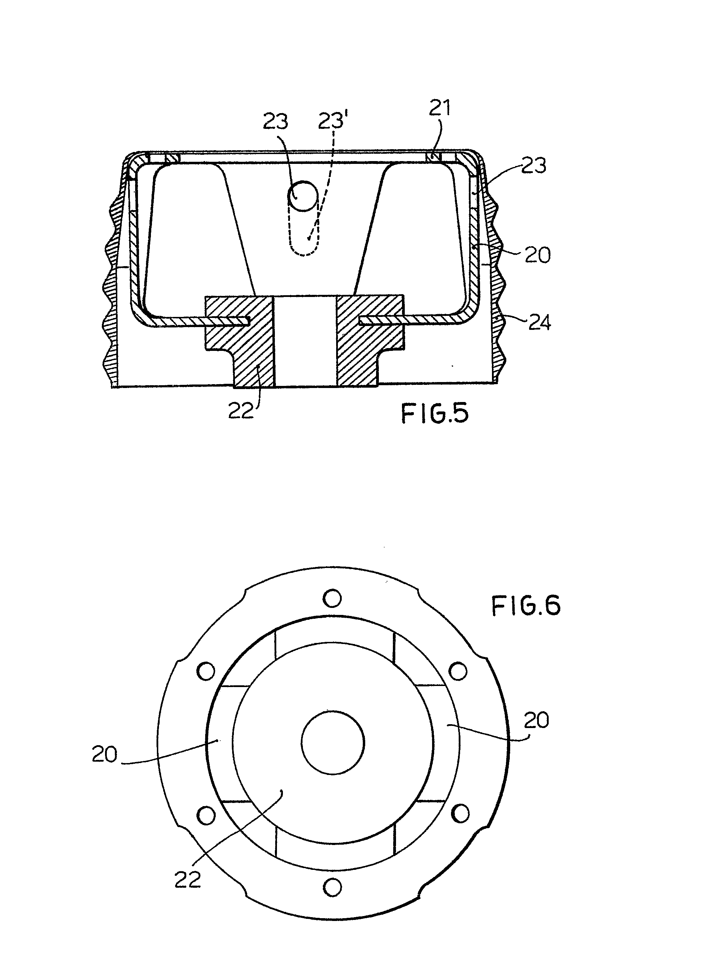

Also in this second embodiment, which is shown in vertical sectional view in Fig. 5 and in plan view in Fig. 6, the spokes are in number of four. It is evident that said spokes may be in a different number, of different shape, of a lighter weight and may have different collapsibility carried out with the possible addition of holes 23 shown by full line, or slots 23' shown by dotted lines.

The hub assembly may be covered with a tube of flexible or bellows material, which has been shown cut away in Fig. 5 where it has been designated at 24.

Should the rigid portion of the hub be provided by casting, high advantages in production and hence in saving would be gained, in that the connection between collapsible portion and rigid portion can be obtained during the casting step. Furthermore, the free ends of the spokes are thus definitely combined, in the rigid portion, which is very important in case of serious collisions, since they can never come off.

0039404

- 6 -

Applicant:

MOMO S.p.A.

I - 20129 MILAN

Via Ciro Menotti, 11

C L A I M S

1. A connecting hub between a steering wheel and steering column, comprising a collapsible portion and a rigid portion for mounting on the steering column, characterized in that said collapsible portion comprises an integral sheet forming a central protruding portion (11, 21) for fastening the steering wheel, and a set of spokes (10, 20) branching off therefrom and extending rearwardly, so that said spokes (10, 20) have one end thereof connected to said central portion (11, 21) while the other end thereof is steadily connected to said rigid portion (12, 22).

2. A hub according to Claim 1, characterized in that the spokes (20) forming the connecjion between said rigid portion (22) and central protruding portion (21) for the fastening of the steering wheel have a C-shaped pattern.

3. A hub according to Claim 1, characterized in that the spokes (10) forming the connection between said rigid portion (12) and central protruding portion (11) for the fastening of

- 7 -

the steering wheel have a S-shaped pattern.

4.   A connecting hub according to any Claims 1, 2 or 3, characterized in that the rigid portion (12, 22) is obtained by casting and that the ends of the spokes (10, 20) are imbedded in the casting of said rigid portion (12, 22).

5.   A hub according to claim 1, characterized in that said spokes (10, 20) are provided with apertures (23, 23'), so that the limit collapsibility thereof can be varied as desired.

FIG.1

FIG.2

FIG.3

FIG.4

FIG.5

FIG.6

**European Patent Office**

0039404

Application number

EP 81 10 2082.5

## EUROPEAN SEARCH REPORT

| | DOCUMENTS CONSIDERED TO·BE RELEVANT | | CLASSIFICATION OF THE APPLICATION (Int Cl.³) |
|---|---|---|---|
| Category | Citation of document with indication, where appropriate, of relevant passages | Relevant to claim | |
| | DE - A - 2 035 937 (PETRI AG) <br> * claims 1 to 6; fig. 1 to 5 * <br><br>— <br><br> GB - A - 2 022 764 (ASTRALI ACCESSORIES) <br> * complete document * <br><br>— <br><br> DE - A1 - 2 614 041 (PETRI AG) <br> * complete document * <br> & US - A - 4 123 948 <br><br>— <br><br> FR - A - 1 305 788 (DAIMLER BENZ AG) <br> * claims 1, 2, 6, 7, 8; fig. 1 * <br><br>— <br><br> DE - U - 7 627 137 (BMW AG) <br> * claims 1 to 4; fig. 1, 2 * <br><br>———— | 1 <br><br><br> 1 <br><br><br> 1-3 <br><br><br><br> 1,5 <br><br><br> 5 | B 62 D   1/10 <br><br><br><br><br> **TECHNICAL FIELDS SEARCHED** (Int. Cl ³) <br><br><br> B 60 R 21/00 <br> B 62 D   1/00 |

**CATEGORY OF CITED DOCUMENTS**

X: particularly relevant
A. technological background
O: non-written disclosure
P: intermediate document
T: theory or principle underlying the invention
E conflicting application
D: document cited in the application
L: citation for other reasons

&: member of the same patent family, corresponding document

X

The present search report has been drawn up for all claims

| Place of search | Date of completion of the search | Examiner |
|---|---|---|
| Berlin | 14-07-1981 | PETTI |

EPO Form 1503.1 06.78